# EUROPEAN PATENT SPECIFICATION

(11) **EP 0 582 865 B1**
(45) Date of publication and mention of the grant of the patent: **15.10.1997**
(21) Application number: 93111679.2
(22) Date of filing: 21.07.1993
(51) Int. Cl.: G01N 15/14

(54) **Method of detecting foreign matter in fluid**
Verfahren zur Feststellung von Fremdstoffen in einer Flüssigkeit
Procédé de détection de matériaux étrangers dans un fluide

(30) Priority: 24.07.1992 JP 218230/92; 12.07.1993 JP 195459/93
(43) Date of publication of application: 16.02.1994
(73) Proprietor: SUMITOMO ELECTRIC INDUSTRIES, LIMITED, Osaka 541 (JP)
(72) Inventor: Konda, Akio, c/o Chichusen Koji Center of Sumitomo, Setagaya-ku, Tokyo (JP); Konaka, Hiroyuki, c/o Chichusen Koji Ctr Sumitomo, Setagaya-ku, Tokyo (JP); Yamashita, Makoto, c/o Chichusen Koji Ctr Sumitomo, Setagaya-ku, Tokyo (JP); Yasuoka, Norio, c/o Itami Works of, Itami-shi, Hyogo (JP); Kato, Shigeru, c/o Itami Works of, Itami-shi, Hyogo (JP); Kometani, Toshio, c/o Itami Works of, Itami-shi, Hyogo (JP)
(74) Representative: Schieschke, Klaus, Dipl.-Ing.

(56) References cited:
- EP-A- 0 446 692
- WO-A-91/09297
- WO-A-93/07471
- DE-A- 3 832 901
- US-A- 4 858 085
- US-A- 5 041 733
- IBM TECHNICAL DISCLOSURE BULLETIN, vol. 28, no. 1, June 1985, New York US, pp. 331-332; anonymous : 'Improved detection of contaminating particles in fluids'
- PATENT ABSTRACTS OF JAPAN vol. 12, no. 8 (P-654)(2855) 12 January 1988 & JP-A-62 168 033

## Description

The present invention relates to a method of detecting any minute foreign matters contained in the entire mass of fluid such as a resin flowing in a molten state or a liquid flowing at normal, high or low temperatures.

If minute foreign matters are contained e.g. in a resin used to form an extrusion-molded joint (EMJ) for a high voltage cross-linked polyethylene (XLPE) insulated cable, they may cause electrical troubles. Thus, it is necessary to detect the existence of any foreign matters in the resin poured into a mold to form an EMJ.

In conventional methods of detecting foreign matters in a resin, a predetermined amount of resin is sampled continuously and the sampled resin is extruded into a sheet 0.1 - 0.5 mm thick. The sheet thus formed is inspected by a laser beam transmission or reflecting method to find any foreign matters of a size larger than 30-40 microns. But what is inspected in these methods was only a sampled-out portion of the fluid, not the entire mass of fluid.

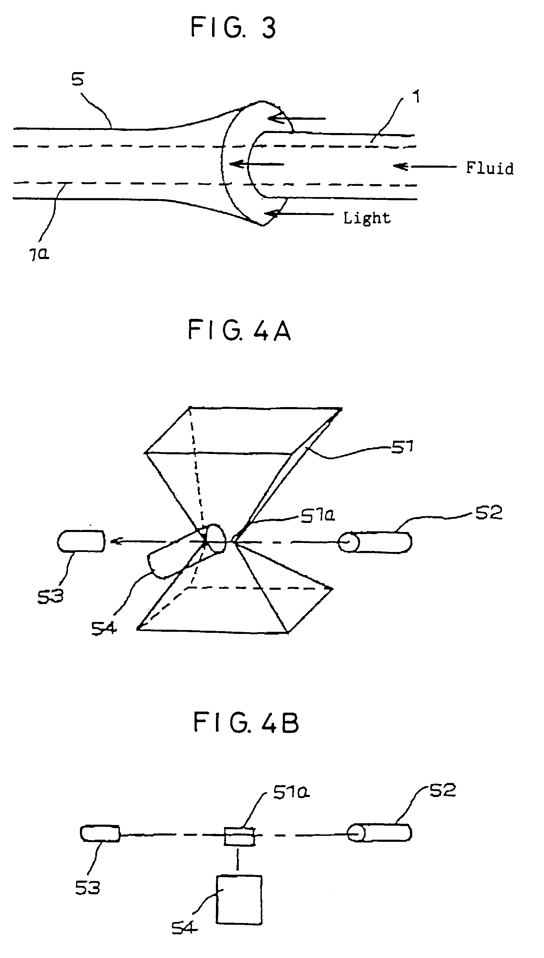

In a method of detecting foreign matters in a liquid medicine, a portion of a liquid is bypassed and guided into a passage 51 made of transparent glass as shown in Fig. 4A. A laser beam is directed at its constricted portion 51a from a laser 52 toward a light collector 53. When the laser beam hits upon foreign matters in the fluid, they will scatter the beam in every direction. Part of the light scattered sideways is received by a light receptor 54 such as a photomultiplier, which produces photoelectric signals. Their magnitudes are compared with those of prechecked reference signals to estimate the size and quantity of the foreign matters flowing in the fluid. This method, too, is a sampling method and not capable of inspecting foreign matters in the entire fluid.

The IBM Technical disclosure, Vol. 28, No. 1, June 1985 shows an improved detection of contaminating particles in fluids, wherein a light beam is directed down a transparent tube. The transparent tube carries stripes or is placed beside a grating, so that light scattered by the particles is modulated at a characteristic frequency which depends on the spatial period of the stripes or grating and the fluid velocity.

According to the present invention, there is provided a method of detecting minute foreign matters in a fluid, comprising the features of claim 1.

Extensive considerations were given to techniques for efficiently detecting minute foreign matters in the entire fluid to be inspected.

We prepared a glass pipe of 25mm in inner diameter and 300 mm long. A liquid having substantially the same optical characteristics (light transmittance, refraction factor, etc.) as a crosslinked polyethylene (XLPE) compound in a molten state was sealed in this glass pipe. Foreign matters (such as glass balls and metallic fibers) of several microns to several millimeters were mixed therein. Light was emitted at the pipe and its scattered light beams were caught by a CCD camera. The glass pipe and the CCD camera were moved at a speed of 10 mm/sec relative to each other.

It was found out that by emitting light from one end of the glass pipe with the CCD camera set at one side of the pipe, the number and shape of foreign matters could be estimated with accuracy by observing the sidewise scattered lights. It was also found out that by setting the angle between the optical axis of the projected light and the direction in which the CCD camera is trained at 90 degrees, the foreign matters were caught at a rate of 100 percent. At an angle other than 90 degrees, the detection rate was poorer due to e.g. total reflection or failure to pick up the scattered lights completely.

With the method according to the present invention, minute foreign matters in the entire fluid can be detected easily and reliably. Detection accuracy is high compared with the conventional sampling method.

Thus, the present invention can be used advantageously for such applications as the extrusion of cable insulation and production of extrusion-molded joints or in a production line of liquid products such as liquid medicines and foodstuffs.

Other features and objects of the present invention will become apparent from the following description made with reference to the accompanying drawings, in which:
Fig. 1A is a schematic view explaining one embodiment of a method of detecting minute foreign matters in a fluid which is not covered by the present invention;
Fig. 1B is a sectional view taken along line X-X of Fig. 1A;
Fig. 2 is a further sectional view;
Fig. 3 is a view showing a first way of projecting light according to the invention;
Fig. 4A is a schematic view explaining a conventional method;
Fig. 4B is its circuit diagram;
Fig. 5 is a schematic view showing how the method according to the present invention is applied to form an EMJ for a high voltage cable; and
Fig. 6 is a block diagram showing how the method according to the present invention is applied to the extrusion of cable insulation.

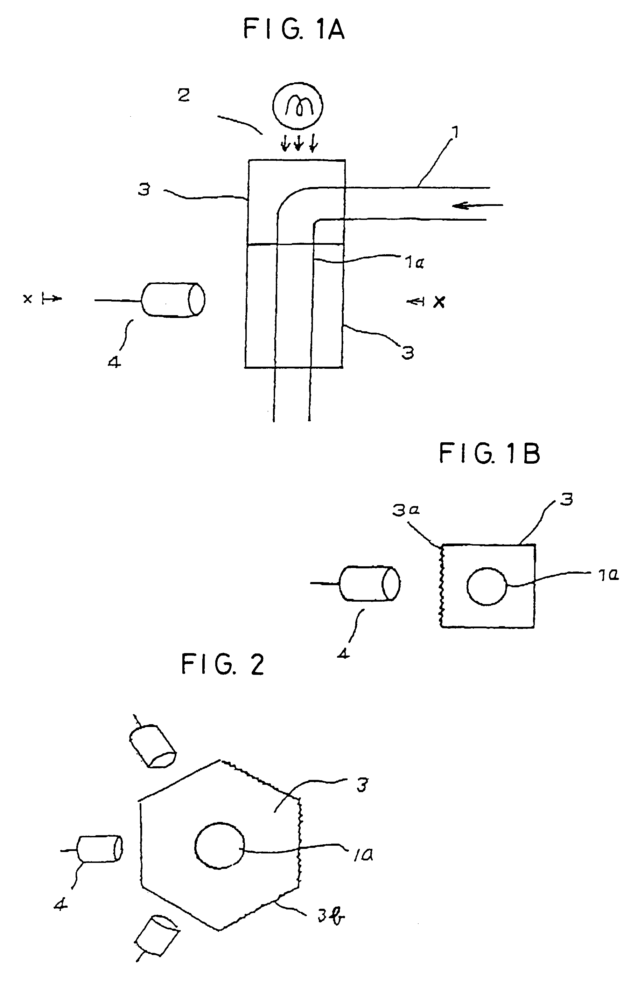

Referring to Fig 1A which is not covered by the present invention, a passage 1 for feeding a high-temperature molten resin from an extruder to a mold is bent at a right angle so that it extends parallel to the projected light. A part la of the passage 1 is formed by a transparent member 3 such as crystal glass to use this part as an observation zone. As shown in Fig. 1B, the transparent member 3 has a square cross-section and a part la of circular cross-section.

A projected light 2 was produced by a halogen lamp or the like, collected by a suitable means and emitted at the transparent member 3 in a direction substantially along the axis of the passage 1. A CCD camera 4 was installed substantially perpendicular to the optical axis (and thus to the axis of the passage) and its focal distance and focal depth were adjusted suitably so as to catch the light sideway scattered by the foreign matters in the fluid.

The observation zone was shielded entirely and housed in a box in order to prevent the CCD camera 4 from picking up any external light. Also, in order to prevent the molten resin from being cooled by contact with the glass, the temperature in the box was kept at 120 - 130°C by providing an electric heater in the box. Further, if necessary, the surface of the glass 3 as the observation surface may be provided with a total reflection-proof coating 3a. Also, a plurality of CCD cameras 4 may be used. The passage may have a sectional shape other than a circle. For example, it may have an oval or similar cross-section.

With this arrangement, a molten resin can be fed through the passage 1 at a constant speed without the possibility of being cooled. The resin was projected on the CCD camera in the form of a substantially transparent fluid.

A molten resin containing metallic, fibrous or other kinds of foreign matters of several microns to several millimeters was extruded into the passage 1. The projected light was scattered upon hitting the foreign matters and the scattered light was observed by the CCD camera. The images of foreign matters were successfully caught by the CCD camera. Of the images of foreign matters (in the scattered lights) caught by the CCD camera, those exceeding a predetermined level were judged as signals and memorized by triggering. The sizes of foreign matters obtained by image analysis with a computer were fairly true to their actual sizes.

But it was also found out that, when observation was made with a single CCD camera 4 from one side of the square transparent member 3 in the manner as described above, foreign matters flowing near the inner wall surface of the transparent member 3 were difficult to detect because they were shadowed and no scattered lights were produced. This results in poor detection accuracy because all the foreign matters are not picked up by the camera.

In order to solve this problem, in Fig. 2, we used a transparent member 3 having a hexagonal cross-section and three CCD cameras 4 which were installed as shown in the figure. The three sides 3b diagonally opposite to the sides directly facing the CCD cameras 4 were blackened or subjected to light absorption treatment.

With this arrangement, the entire area of the passage 1 was within the combined field of view of the CCD cameras 4. All the scattered light and the image of foreign matters were caught at a rate of 100% by the CCD cameras 4. If the flow velocity of the fluid is too high for the CCD cameras to pick up all the scattered lights, a shutter mechanism may be provided on each CCD camera to catch scattered light more vividly.

The incident light may be 1) one having such a wavelength that it shows a high transmittance in a liquid, 2) one having such a wavelength that it shows a high reflectance against minute foreign matters, 3) a visible light having a wide wavelength band, which is introduced through a light-collecting system such as a lens, 4) a laser beam produced by a continuous oscillation laser capable of oscillating wavelengths having a high transmittance in a fluid, or 5) in case the flow velocity of the fluid is too high to catch scattered light stably, the incident light may be converted by means of a highspeed shutter into pulse lights synchronized with the image processing system in order to pick up scattered lights more vividly.

In order to emit light in a direction substantially parallel to the passage, the light may be passed through a coaxial glass pipe as shown in Fig. 3. In this case, the light may be emitted from the direction opposite to the direction of fluid flow.

The incident light may be emitted from a ring-shaped (annular) lamp using an optical fiber directly at the transparent member. In this case, it is not necessary to bend the passage 1 at a right angle upstream of the observation zone. This improves the freedom of design and flexibility of application in constructing the system.

In case of a high-temperature or low-temperature fluid, the matters for the glass member and the metal member in the observation zone should be selected taking their linear expansion coefficient into consideration. Further, it is necessary to provide a suitable leakpreventive means on the joint.

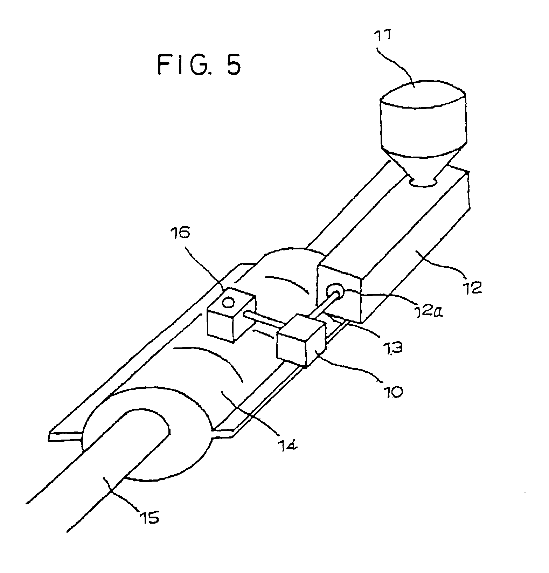

In Fig. 5, numeral 10 designates a box for detecting foreign matters carrying the observation unit. A resin in the form of pellets in a tank 11 is fed to an extruder 12 where the resin is heated and melted. A fine filter 12a is fitted on its exit. The high-temperature molten resin extruded from the extruder 12 is fed through a passage 13 to the foreign material detector box 10 and then to a mold 14 containing a portion where a cable 15 is to be connected. Any foreign matters contained in the molten resin are detected by the observation unit in the detector box 10 and expelled from a discharge valve unit 16.

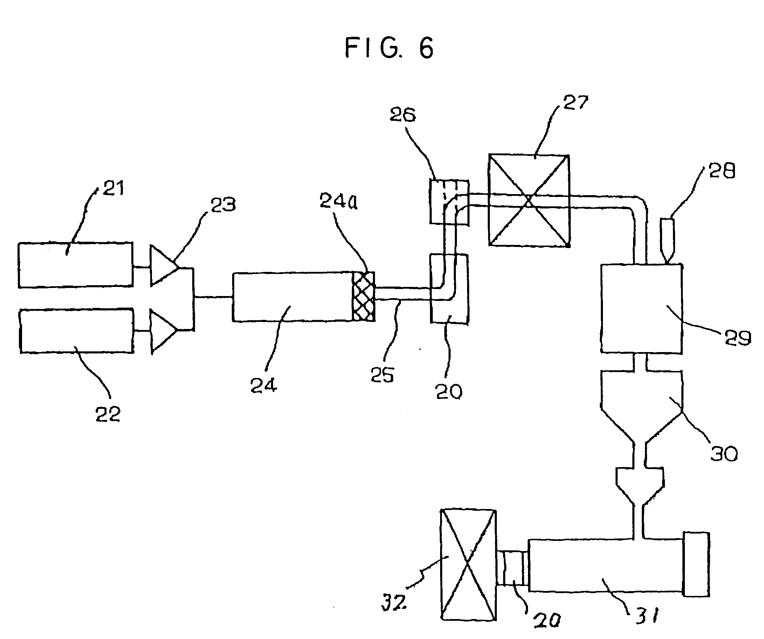

As shown in Fig. 6, resin pellets 21 as a base resin and an antioxident 22 are weighed at 23, mixed and melted at 24 and fed through a fine filter 24a to a fluid passage 25. In the passage 25 is provided an observation unit 20 according to the present invention, which serves to detect foreign matters contained in the molten resin. The resin is fed from the unit 20 through a pelletizer 27 to a portion 29 for impregnating the resin with a crosslinking agent.

If foreign matters are detected in the observation unit 20, the resin is discharged out of the line through a discharging portion 26 having a changeover valve. The resin, having been impregnated with a crosslinking agent, is stored temporarily in a hopper 30 and supplied at a predetermined rate to an extruder 31. The resin is then extruded by a cross head 32 to extrude a cable insulation or the like.

Since it is not necessary to bend the fluid passage at a right angle just before the observation unit, when manufacturing a cable, the observation unit 20 can be disposed between the extruder 31 and the cross head (or forming portion) 32. With this arrangement, foreign matters can be detected just before the forming step.

## Claims

1. A method of detecting minute foreign matters in a fluid, wherein part of a fluid passage is defined by a transparent member and wherein lights scattered by foreign matters in the fluid are observed at said transparent member of said fluid passage from a direction substantially perpendicular to the direction in which the fluid flows in the fluid passage, whereby detecting minute foreign matters in the fluid characterized in that an annular light beam is emitted into said transparent member substantially along the axis of said fluid passage so as to surround said fluid passage.

2. A method of detecting minute foreign matters as claimed in claim 1, wherein said light beam is emitted from a light source through an optical fiber and directly guided to the transparent member so as to substantially surround the fluid passage in a ring shape.

3. A method of detecting minute foreign matters as claimed in claim 1, wherein a CCD camera is used as an observation means so as to determine the size of foreign matters by processing images obtained by the CCD camera with a computer.

## Patentansprüche

1. Verfahren zur Feststellung winziger Fremdstoffe in einer Flüssigkeit, bei dem ein Teil einer Fluidleitung durch ein transparentes Element definiert ist, und bei dem Lichtanteile, die durch Fremdstoffe in der Flüssigkeit zerstreut werden, an dem transparenten Element der Fluidleitung aus einer Richtung beobachtet werden, die im Wesentlichen einen rechten Winkel zu der Fließrichtung der Flüssigkeit in der Fluidleitung bildet, wodurch winzige Fremdstoffe in der Flüssigkeit festgestellt werden, dadurch gekennzeichnet, dass ein ringförmiger Lichtstrahl im Wesentlichen entlang der Achse der Fluidleitung so in das transparente Element eingestrahlt wird, dass er die Fluidleitung umgibt.

2. Verfahren zur Feststellung winziger Fremdstoffe nach Anspruch 1, bei dem der Lichtstrahl aus einer Lichtquelle so durch eine optische Faser ausgestrahlt und direkt zu dem transparenten Element geführt wird, dass er die Fluidleitung im Wesentlichen in Ringform umgibt.

3. Verfahren zur Feststellung winziger Fremdstoffe nach Anspruch 1, bei dem eine CCD-Kamera als Beobachtungsmittel verwendet wird, um die Größe der Fremdstoffe durch die Verarbeitung von mittels der CCD-Kamera erhaltenen Bildern zu bestimmen.

## Revendications

1. Procédé de détection de matières étrangères de petites dimensions dans un fluide, dans lequel une partie d'un passage de fluide est définie par un organe transparent et dans lequel des lumières diffusées par des matières étrangères dans le fluide sont observées au niveau dudit organe transparent dudit passage de fluide depuis une direction sensiblement orthogonale à la direction dans laquelle le fluide circule dans le passage de fluide, de manière à détecter des matières étrangères de petites dimensions dans le fluide, caractérisé en ce qu'un faisceau annulaire de lumière est émis dans ledit organe transparent sensiblement le long de l'axe dudit passage de fluide de manière à entourer ledit passage de fluide.

2. Procédé de détection de matières étrangères de petites dimensions selon la revendication 1, dans lequel ledit faisceau lumineux est émis depuis une source de lumière au travers d'une fibre optique et directement guidé vers l'organe transparent de manière à entourer sensiblement le passage de fluide selon une configuration en anneau.

3. Procédé de détection de matières étrangères de petites dimensions selon la revendication 1, dans lequel une caméra à dispositif à couplage de charges est utilisée comme moyen d'observation de manière à déterminer la dimension des matières étrangères en traitant les images obtenues par la caméra à dispositif à couplage de charges par un ordinateur.
